# EUROPEAN PATENT APPLICATION

(11) **EP 4 586 029 A1**
(43) Date of publication of application: **16.07.2025**
(21) Application number: 22967960.0
(22) Date of filing: 13.12.2022
(51) Int. Cl.: G05B 19/418, G05B 23/02

(54) **METHOD AND SYSTEM FOR MANAGING ASSET ADMINISTRATION SHELL LIFE-CYCLE-BASED INFORMATION MODEL FOR DIGITAL TWIN**

(30) Priority: 08.12.2022 KR 20220170297
(71) Applicant: Korea Electronics Technology Institute, Bundang-gu, Seongnam-si Gyeonggi-do 13509 (KR)
(72) Inventor: LEE, Jae Hyeon, Seoul 02726 (KR)
(74) Representative: Isarpatent
(86) International application number: PCT/KR2022/020183
(87) International publication number: WO 2024/122702

(57) **Abstract**

A method and a system for managing an asset administration shell life-cycle-based information model for a digital twin are provided. The method for managing an information model, according to an embodiment of the present invention, configures and manages (produces/modifies/deletes) an information model stepwise on the basis of an asset administration shell life cycle and supports a policy that can be shared/referenced. In addition, the present invention is a web-based service that can be used anywhere independently of a platform without installation, eliminates entry barriers of the asset administration shell through the use of user-friendly terms and standardized use patterns, and automatically produces some required attribute values according to a user and a life cycle so as to minimize input items. Therefore, businesses or operators considering digital twin application in the smart manufacturing field can conveniently create an asset administration shell information model and easily connect reference models of the digital twin.

## Description

### Technical Field

The disclosure relates to a method and a system for managing an information model of an asset administration shell (IEC 63278) which is international standards referenced to create digital twins in the smart manufacturing field.

### Background Art

An asset administration shell refers to an information model that defines manufacturing devices as digital data. Digital twins created by the asset administration shell provide a standardized method for connecting with manufacturing devices and IT systems via a network and exchanging data. Efficient management of the asset administration shell information model becomes the cornerstone for effective application of digital twins and data utilization, which are the basis of smart factories.

The asset administration shell information model is described by using structures and attributes defined in the standards, and is stored in an XML file format. The AASX package explorer (hereinafter, APE) which is the most commonly used tool is the only UI tool that may create the asset administration shell information model until now, except for a general code editor.

However, the APE is a window-based application that may only be used in a local environment, and is very difficult to use and focuses on editing in the unit of asset administration shell, and hence, there is a problem that it is cumbersome to edit and reuse sub-models.

### Disclosure

### Technical Problem

The disclosure has been developed to solve the above-described problems, and an object of the disclosure is to provide a method and a system for managing, which configure and manage (create/correct/delete) information models by stages based on a life cycle of an asset administration shell, and support a policy for sharing/referencing, as a solution for allowing an enterprise or an operator considering application of digital twins in the field of smart manufacturing to easily create an asset administration shell information model and to easily connect reference models of digital twins.

### Technical Solution

According to an embodiment of the disclosure to achieve the above-described object, a method for managing an asset administration shell life-cycle-based information model may include: providing a sub-model template to create a sub-model; and combining the created sub-models and providing an asset administration shell template to create an asset administration shell.

The sub-model template may include items for receiving input of sub-model elements.

The sub-model elements in the sub-model template may be added, corrected and deleted.

Providing the template may be performed in a process of designing a manufacturing site asset.

The asset administration shell template may include items for receiving input of the created sub-models.

Providing the asset administration shell template may be performed in a process of developing the manufacturing site asset as a product.

According to the disclosure, the method for managing the asset administration shell life-cycle-based information model may further include inputting attribute values of a manufacturing site asset into the asset administration shell template, and instancing by associating the asset administration shell template with the manufacturing site asset.

According to the disclosure, the method for managing the asset administration shell life-cycle-based information model may further include providing a digital twin template capable of creating a digital twin of the manufacturing site asset by using an asset administration shell instance.

Instancing may be performed in a process of producing the productized manufacturing site asset, and providing the digital twin template may be performed in a process of using the produced manufacturing site asset.

According to another aspect of the disclosure, there is provided a system for managing an asset administration shell life-cycle-based information model, the system including: an asset administration shell manager configured to provide a sub-model template to create a sub-model, and to combine the created sub-models and to provide an asset administration shell template to create an asset administration shell; and a web hub configured to provide templates which are provided by the asset administration shell manager as web-based user UIs.

According to still another aspect of the disclosure, there is provided a method for managing an asset administration shell life-cycle-based information model, the method including: combining sub-models and providing an asset administration shell template to create an asset administration shell; inputting attribute values of a manufacturing site asset into the asset administration shell template, and instancing by associating the asset administration shell template with the manufacturing site asset; and providing a digital twin template capable of creating a digital twin of the manufacturing site asset by using an asset administration shell instance.

According to yet another aspect of the disclosure, there is provided a system for managing an asset administration shell life-cycle-based information model, the system including: an asset administration shell manager configured to combine sub-models and provide an asset administration shell template to create an asset administration shell, to input attribute values of a manufacturing site asset into the asset administration shell template, and to instance by associating the asset administration shell template with the manufacturing site asset, and to provide a digital twin template capable of creating a digital twin of the manufacturing site asset by using an asset administration shell instance; and a web hub configured to provide templates which are provided by the asset administration shell manager as web-based user UIs.

### Advantageous Effects

According to embodiments as described above, an information model may be configured and managed (create/correct/delete) by stages based on the life-cycle of an asset administration shell, and sharing/referencing policies are supported, so that an enterprise or operator considering application of digital twins in the field of smart manufacturing is enabled to easily create an asset administration shell information model and to easily connect a reference model of a digital twin.

### Description of Drawings

FIG. 1 is a view illustrating a relationship between an asset administration shell and digital twins in a smart factory.
FIG. 2 is a view illustrating elements of an asset administration shell.
FIG. 3 is a view illustrating a class diagram of a sub-model element;
FIG. 4 is a view illustrating a reference relationship with a sub-model template role according to a definition entity.
FIG. 5 is a view illustrating a class diagram of an asset administration shell.
FIG. 6 is a view illustrating a method for managing according to a life cycle of an asset administration shell information model.
FIG. 7 is a view illustrating an asset administration shell information model management system structure.

### Best Mode

Hereinafter, the disclosure will be described in more detail with reference to the drawings.

Embodiments of the disclosure provide a web-based asset administration shell information model management method and system which is capable of partially creating, combining, structuring an information model with reference to a life cycle of an asset administration shell.

The disclosure relates to a technology that enables a web-based service to be used everywhere without installation independently from a platform, removes entry barriers to asset administration shells by using user-friendly terms and standardizing usage patterns, minimizes input items by automatically generating some of necessary attribute values according to a user and a life cycle, subdivides management units with reference to the life cycle, improves reuse through sharing/reference policies, and enables delivering and sharing through OpenAPI for each element of an asset administration shell information model.

### 1. Concepts of Digital Twins and Asset Administration Shell

Digital twin is a next-generation technology in the field of smart manufacturing that defines various attributes and information that real physical devices have as digital information, and configures virtual objects, thereby breaking away from physical (spatial/temporal) restrictions that real devices have and interlocking with various applications and services.

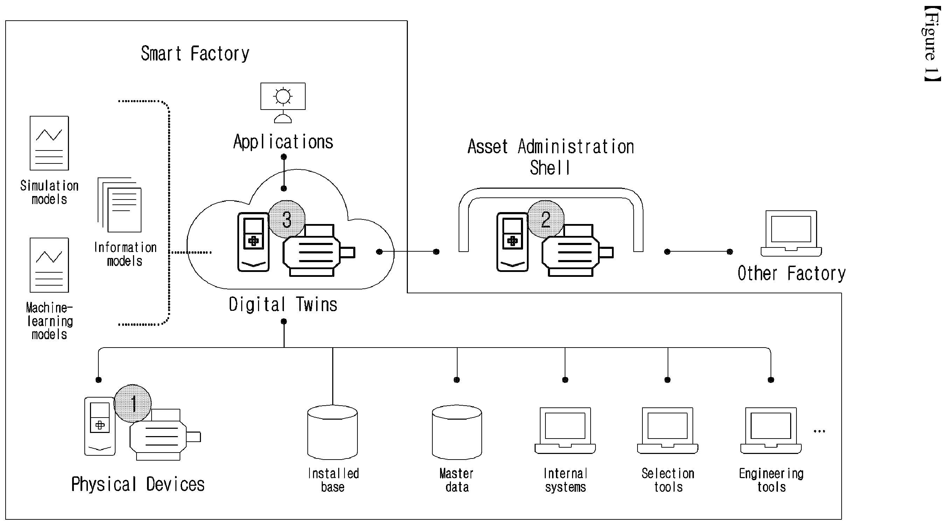

As shown in FIG. 1, real physical devices ① may be modeled by an asset administration shell, IEC 63278 ② which is international standards, and digital twins ③ may be configured with reference to an information model of the corresponding asset administration shell. The digital twins created in this case may be connected with a target device to interlock therewith.

### 2. Structure of Asset Administration Shell

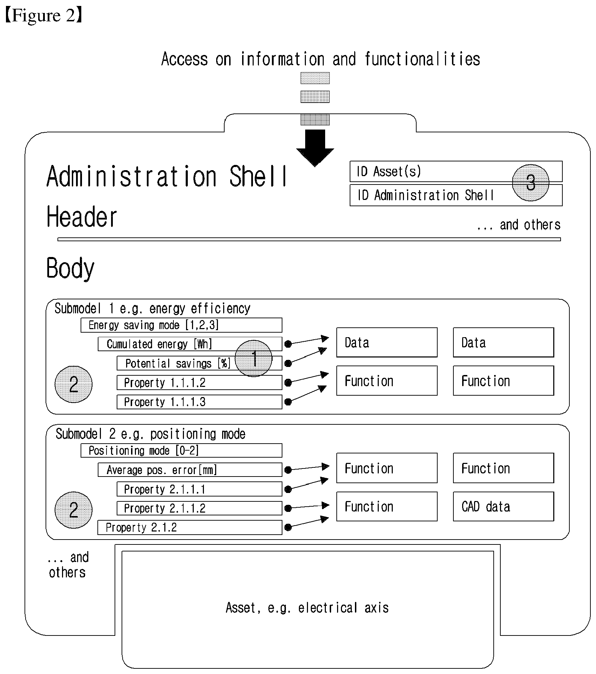

The asset administration shell (FIG. 2) is standards that are defined to model by including a variety of information to configure digital twins of an asset (device), and provides a method for storing and representing all information that is generated and used in the life cycle (design-develop-produce-use) of the asset (device). Main elements of the asset administration shell are as follows.

### ① Sub-model element (hereinafter, SME)

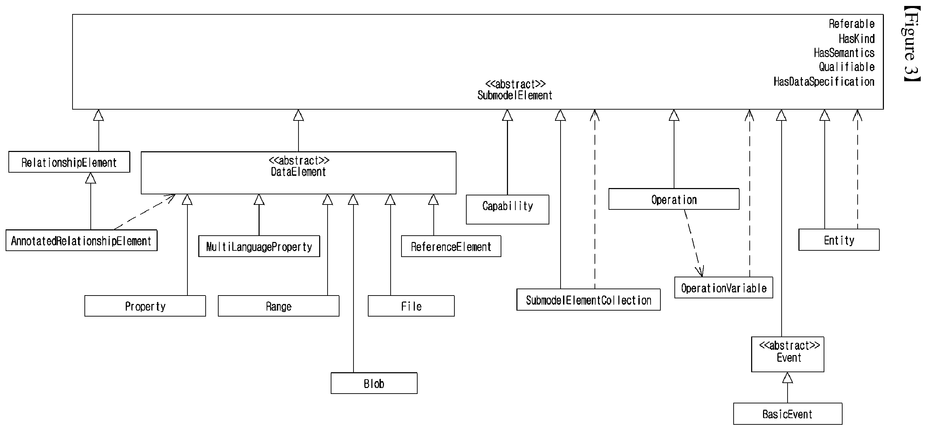

A SME (FIG. 3) is an element that is designed to represent a variety of information needed for asset modeling, and includes various types of elements defined through the asset administration shell standards (IEC 63278) as follows:
- SubmodelElementCollection: an element that has the SME as a subordinate element to configure a tree hierarchical structure;
- Property: an element that has an attribute in a basic key/value form;
- MultiLanguageProperty: an element that stores different values according to language setting;
- Range: an element that represents a range-limited value;
- Blob: an element that contains binary information such as files, objects, etc.;
- File: an element that contains a file path.

Besides these, various types of elements such as RelationShipElement, Capability, Operation, Event, Entity, etc. may be provided.

### ② Sub-model (hereinafter, SM)

A sub-model refers to an information model that defines various SMEs necessary for constituting information related to a specific domain (subject) in a hierarchical structure, and, by using a pre-defined SM, a set of information necessary for the asset administration shell may be simply added. Such a pre-defined SM is referred to as a sub-model template (hereinafter, SMT).

An attribute value is not inputted to each SME which constitutes the SMT used as a template. The SMT just performs the role of guiding which attributes should be inputted in which domain. Thereafter, when a real asset is modeled through the asset administration shell, an attribute value corresponding to the asset may be inputted with reference to the corresponding template. The SM at this stage may be referred to as a sub-model instance (hereinafter, SMI) in the asset administration shell standards (IEC 63278), and has the same structure of the information model as the SMT, but may be used differently.

A standardized SM may be reference information that commonly uses the asset administration shell information model in various solutions, and also may make it possible to interlock information between heterogeneous systems.

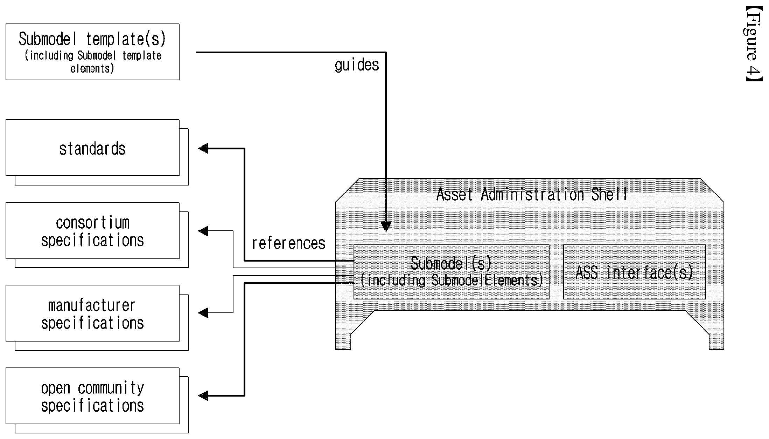

As shown in FIG. 4, in the asset administration shell (IEC 63278) standards, definition entities of the SMT may be mentioned as follows:
- Standards: SMT defined in the standardization group;
- Consortium specifications: SMT defined in the industry/group/association;
- Manufacturer specifications: SMT defined in a manufacturer;
- Open community specifications: SMT defined in a user group;

### ③ Administration Shell (hereinafter, AAS)

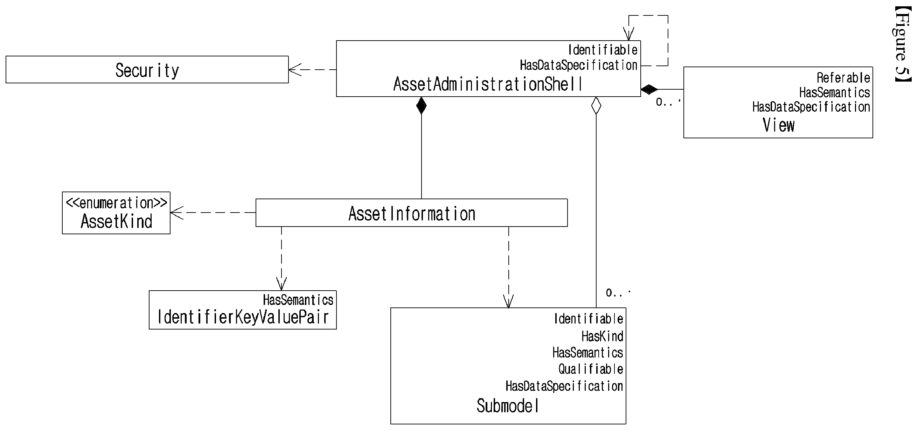

An AAS is the top element of the asset administration shell information model, and may include recognition information of an asset necessary for modeling a specific asset (device), and SMs to be referenced. FIG. 5 is a view illustrating a class diagram of the AAS. The AAS is used through the following steps during a life cycle of the asset.

### 1) Design/development step (AAS type: Type)

- Specifications of the asset (device) are determined and attributes and functions are defined and implemented.
- All design outputs such as CAD data, diagrams, embedded software are connected to the AAS type
- From idea/conceptualization step to the first prototype/test step

### 2) Feedback/update step (AAS type: Type)

- Reflection of design change of the asset (device), error correction, etc.
- External information related to the asset, such as technology data sheets, marketing information, is generated and is connected to the AAS type.
- To a selling process start step

### 3) Production step (AAS type: Instance)

- A plurality of physical assets (products) are produced based on the asset (device).
- An AAS instance is generated for every individual asset (product) based on the AAS type information.
- Specific information such as production, logistics, qualification, testing, etc. is connected with the AAS instance.

### 4) Use/maintenance and repair step (AAS type: Instance)

- Step of using by an asset (product) buyer
- Dat is connected with the AAS instance and shared with a manufacturer and a value chain partner (including maintenance and management, redesigning, optimization and discarding of the instance).
- The whole lifespan period recording is connected with the asset and is stored/shared for documentation.

### 3. Asset Administration Shell Life Cycle-Cased Information Model Management Method

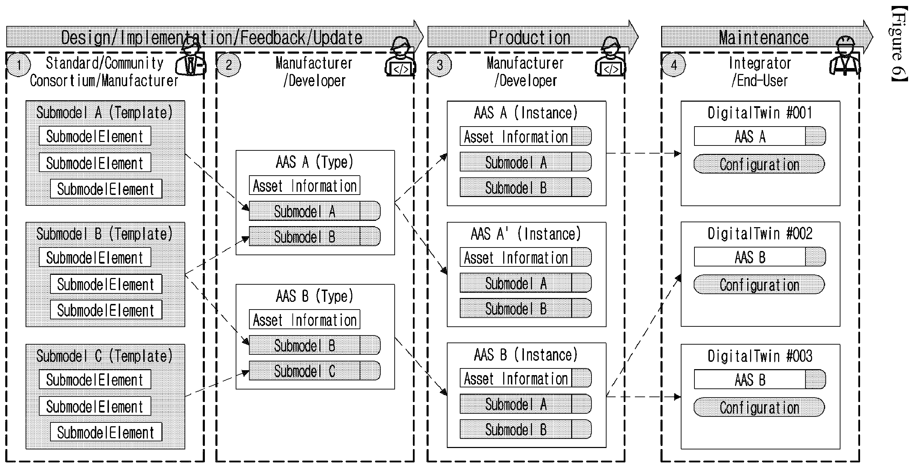

FIG. 6 is a view illustrating an asset administration shell life cycle-based information model management method according to an embodiment.

### (1) Template Management (Sub-model Template)

A SMT may be created/corrected/deleted as an information model for data exchange and utilization between heterogeneous systems in a specific field. The SMT may be defined by a standardization group, association, manufacturer, or user group according to interests, and may be referenced for future configuration of an asset administration shell information model. The SMT may be referred to as a template for easy understanding by normal users.

The template management (①) provides a SMT that creates a SM in the process of designing manufacturing site assets. As shown in FIG. 6, the SMT includes items for receiving input of SMEs (sub-model elements). SMEs may be free to be added, corrected, and deleted in the SMT. The SM created through this may be reused in the subsequent steps.

Some of necessary attribute values constituting the SME input item may be automatically generated as default values according to a user, so that the input items may be minimized.

### (2) Product Management (AAS Type)

When a manufacturer develops a new product model or a developer wants to manage a specific device as a digital twin, an AAS type may be created and used. In this case, items necessary for a corresponding asset may be easily added by subject by referring to a pre-defined SMT. The created AAS type may be used as a kind of product catalog, and static information such as a product image, specifications may be identified. The AAS type is referred to as a product for use of terms that are easy for normal users to understand.

The product management (②) provides an AAS template that may create an AAS by combining sub-models created in the template management (①) in a process of developing a manufacturing site asset as a product. As shown in FIG. 6, the AAS template includes items for receiving input of created SMs. The SMs may be free to be added, corrected, and deleted in the AAS template. The ASS template created through this may be reused in the subsequent steps.

### ③ Asset Management (AAS Instance)

A developed product may be produced as a plurality of physical products based on one model. In an embodiment of the disclosure, each of the produced products is referred to as an asset to avoid confusion. An asset produced by a manufacturer is sold and used by an end user. Data resulting therefrom may be associated with the corresponding asset. Basically, an information item of each asset has the same structure as the base product, but may be configured with a different value according to an environment where each asset is used. Like this, the manufacturer or end user may create an AAS Instance on the corresponding asset with reference to the AAS Type of the corresponding product, and may set an appropriate value for a usage environment to interlock with the real asset.

In the asset management (③), information (attribute values) of the manufacturing site asset may be inputted to the AAS template which is created in the product management (②) in the process of producing the productized manufacturing site asset, and the AAS template may be instanced by interlocking with the manufacturing site asset. The ASS instance created through this may be reused in the subsequent steps.

As shown in FIG. 6, the AAS template may include items for receiving input of asset information. Some of the attribute values necessary for configuring asset information input items may be automatically generated as a default value according to a user, so that the input items may be minimized.

### (4) Digital Twin Management

To create digital twins, an asset administration shell information model to be referenced is needed. In embodiments of the disclosure, an application programming interface (API) may be provided to deliver the asset administration shell information model created through the asset management to an external system, so that inconvenience caused in a related-art file delivery method and asynchronicity may be enhanced.

The digital twin management (④) provides a digital twin template that creates digital twins of the manufacturing site asset by using the ASS instance created in the asset management (③) in the process of using the produced manufacturing site asset.

As shown in FIG. 6, the digital twin template includes items for receiving input of the created ASS instances. Through the digital twin template, the ASS instances may be free to be added, corrected and deleted. The digital twin template created through this may be usable in an external system through the API.

Some of the attribute values necessary for configuring the ASS instance input items may be automatically generated as a default value according to a user, so that the input items may be minimized.

### 4. Asset Administration Shell Information Model Management System

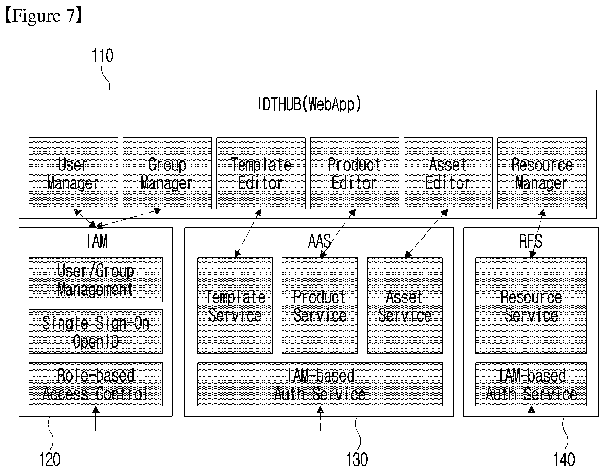

FIG. 7 is a view illustrating a configuration of an asset administration shell information model management system according to another embodiment of the disclosure.

The asset administration shell information model management system according to an embodiment of the disclosure is a web-based service and may be used anywhere without installing an application independently from a platform. In addition, the asset administration shell information model management system according to an embodiment of the disclosure may use a micro service architecture (MSA) constituting a server in a minimum function unit, thereby enhancing complexity and improving flexibility.

The asset administration shell information model management system according to an embodiment of the disclosure may include an industrial digital twin (IDT) HUB 110, an identity & access manager (IAM) 120, an asset administration shell (AAS) manager 130, and a resource file server (RFS) 140 as shown in the drawing.

The IAM 120 is a server that performs user authentication and user/group management, OpenID-based user authentication integration management, role-based resource access management.

The AAS manager 130 is a server that provides an API for managing(create/correct/delete/reference/share) the asset administration shell information model, is associated with a DB to store the information model, and provides an Open API for associating with an external solution.

The RFS 140 is a server that provides a service for storing resources (files such as images, documents, etc.) necessary for the asset administration shell information model, and performs in-system authentication and access control.

The IDT HUB 110 is a web server that provides a web-based user UI by using APIs of the backend servers 120, 130, 140.

### 5. Variations

Up to now, the method and system for managing the asset administration shell life-cycle-based information model for the digital twin have been described with reference to preferred embodiments.

In the above-described embodiment, as a method for creating and managing the asset administration shell information model, which is international standards for application of digital twin technologies in the field of smart manufacturing, a method and a system for configuring and managing(create/correct/delete) an information model by stages based on the life-cycle of the asset administration shell, and supporting sharing/referencing policies are suggested, and the asset administration shell information model creating/sharing/referencing method is more simply and flexibly implemented.

Accordingly, the accessibility to asset administration shell-based digital twin technology which is new technology may be enhanced, and the interoperability between interfaces in an existing smart factory may be guaranteed by observing international standard asset administration shell standards.

The technical concept of the disclosure may be applied to a computer-readable recording medium which records a computer program for performing the functions of the apparatus and the method according to the present embodiments. In addition, the technical idea according to various embodiments of the disclosure may be implemented in the form of a computer readable code recorded on the computer-readable recording medium. The computer-readable recording medium may be any data storage device that can be read by a computer and can store data. For example, the computer-readable recording medium may be a read only memory (ROM), a random access memory (RAM), a CD-ROM, a magnetic tape, a floppy disk, an optical disk, a hard disk drive, or the like. A computer readable code or program that is stored in the computer readable recording medium may be transmitted via a network connected between computers.

In addition, while preferred embodiments of the present disclosure have been illustrated and described, the present disclosure is not limited to the above-described specific embodiments. Various changes can be made by a person skilled in the at without departing from the scope of the present disclosure claimed in claims, and also, changed embodiments should not be understood as being separate from the technical idea or prospect of the present disclosure.

## Claims

1. A method for managing an asset administration shell life-cycle-based information model, the method comprising:
providing a sub-model template to create a sub-model; and
combining the created sub-models and providing an asset administration shell template to create an asset administration shell.

2. The method of claim 1, wherein the sub-model template comprises items for receiving input of sub-model elements.

3. The method of claim 2, wherein the sub-model elements in the sub-model template are added, corrected and deleted.

4. The method of claim 2, wherein providing the template is performed in a process of designing a manufacturing site asset.

5. The method of claim 1, wherein the asset administration shell template comprises items for receiving input of the created sub-models.

6. The method of claim 4, wherein providing the asset administration shell template is performed in a process of developing the manufacturing site asset as a product.

7. The method of claim 1, further comprising inputting attribute values of a manufacturing site asset into the asset administration shell template, and instancing by associating the asset administration shell template with the manufacturing site asset.

8. The method of claim 6, further comprising providing a digital twin template capable of creating a digital twin of the manufacturing site asset by using an asset administration shell instance.

9. The method of claim 8, wherein instancing is performed in a process of producing the productized manufacturing site asset, and
wherein providing the digital twin template is performed in a process of using the produced manufacturing site asset.

10. A system for managing an asset administration shell life-cycle-based information model, the system comprising:
an asset administration shell manager configured to provide a sub-model template to create a sub-model, and to combine the created sub-models and to provide an asset administration shell template to create an asset administration shell; and
a web hub configured to provide templates which are provided by the asset administration shell manager as web-based user UIs.

11. A method for managing an asset administration shell life-cycle-based information model, the method comprising:
combining sub-models and providing an asset administration shell template to create an asset administration shell;
inputting attribute values of a manufacturing site asset into the asset administration shell template, and instancing by associating the asset administration shell template with the manufacturing site asset; and
providing a digital twin template capable of creating a digital twin of the manufacturing site asset by using an asset administration shell instance.

12. A system for managing an asset administration shell life-cycle-based information model, the system comprising:
an asset administration shell manager configured to combine sub-models and provide an asset administration shell template to create an asset administration shell, to input attribute values of a manufacturing site asset into the asset administration shell template, and to instance by associating the asset administration shell template with the manufacturing site asset, and to provide a digital twin template capable of creating a digital twin of the manufacturing site asset by using an asset administration shell instance; and
a web hub configured to provide templates which are provided by the asset administration shell manager as web-based user UIs.
